# EUROPEAN PATENT APPLICATION

(11) **EP 3 795 823 A1**
(43) Date of publication of application: **24.03.2021**
(21) Application number: 19183304.5
(22) Date of filing: 28.06.2019
(51) Int. Cl.: F03D 13/25, E02D 27/42, E02B 17/00

(54) **MONOPILE AND WIND TURBINE STRUCTURE**

(71) Applicant: Ørsted Wind Power A/S, 7000 Fredericia Skaerbaek (DK)
(72) Inventor: Elkjaer, Andreas, 2820 Gentofte (DK); Rasmussen, Martin Frederick, 2820 Gentofte (DK); Simonsen, Henrik Skovgaard, 2820 Gentofte (DK)
(74) Representative: Gaunt, Thomas Derrick

(57) **Abstract**

A monopile comprising a body (1) having a hollow interior, a toe (9) at a distal end for insertion into a soil (19) during monopile installation, and a proximal end region (2) for supporting a structure (7), such as a wind turbine tower, once the monopile has been installed. The body (1) further comprises a door aperture (12) provided in the body (1) for accessing the interior of the body (1). The door aperture (12) is configured to receive a door assembly (6,18) once the monopile (1) has been installed.

## Description

The present invention concerns a monopile for supporting a structure, such as a wind turbine tower, and in particular a monopile that does not require a transition piece, a so-called 'TP-less' monopile. The present invention is particularly suited to offshore wind turbine structures, and monopile foundations used in the same.

Offshore wind farms are becoming increasingly important as a source of renewable energy. As the demand for zero carbon energy increases, there is an ever greater need to find new ways to reduce the associated costs. In this respect, one of the major cost factors associated with wind energy relates to the costs associated with installing wind turbine structures, particularly as wind farms often contain large numbers of turbines.

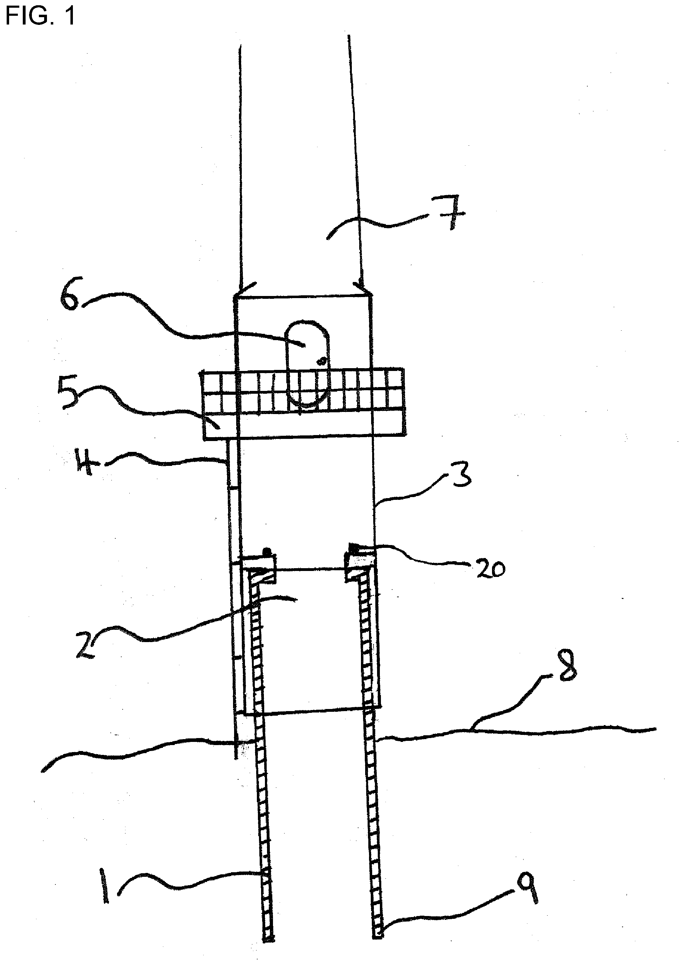

Typically, monopiles are used for offshore foundations. A monopile has a long cylindrical caisson that is typically assembled from tube sections onshore, and then is subsequently installed offshore. During installation, a pile hammer is used to apply a series of axial impacts to the head of the monopile to drive the foundation down into the seabed soil in an insertion direction. Once installed, the monopile provides a central support tube, on top of which is attached a transition piece. Figure 1 shows a conventional arrangement of a monopile 1 with a transition piece 3. The transition piece 3 has a flanged structure, and is fitted over the proximal end 2 of the monopile 1 and secured in place using grouting or using bolts 20 installed vertically through horizontal flanges. Importantly, by adjusting the mounting of the transition piece 3, any inaccuracies in the inclination of the monopile arising during its installation can be corrected by grouting. As such, the transition piece 3 can be adjusted to provide a level mating surface onto which a wind turbine tower 7 can then be bolted. The transition piece 7 is also used to support various secondary steel structures, such as a boat landing, external ladders 4 and a platform 5, as well as housing an access door 6 for accessing the interior of the wind turbine structure for example for inspection or to ascend to the top of the wind turbine for e.g. maintenance.

There are however issues with the use of transition pieces. In particular, after the monopile has been installed, it takes time to fit the transition piece before the turbine tower can be subsequently mounted. This adds significantly to the overall installation costs because the heavy lift equipment needed to install both the monopile and the turbine tower typically has to wait idling while the mounting of the transition piece is secured. Also, the transition piece 3 uses a considerable amount of steel because of the large surface overlap between the transition piece 3 and the proximal end 2 of the monopile body 1. As such, a transition piece 3 can be relatively expensive. The mounting of the transition piece on the monopile is also vulnerable to failure due to the significant cyclic loads applied during wind turbine operation. Due to the above issues, there has been a move towards developing new monopile designs that do not require a separately attached transition piece.

A major challenge in providing an offshore structure without a separately attached transition piece is that the large impact forces applied when driving a monopile during installation risks damage to the impacted structure. Therefore, it is not possible to simply provide a monopile with a 'transition piece'-type structure pre-welded at the top, because any such structure risks being deformed or fatigued during installation. To attempt to address this, it has been proposed to provide a monopile with a mounting formation provided on a projection set back from the end of the monopile body and onto which a wind turbine tower may then be attached. EP 1 770 276 discloses one example of such a TP-less monopile arrangement. With such a design, the top of the monopile is able to receive impacts during installation, without compromising the attachment points provided on the projection. Once in place, the wind turbine tower can then be directly mounted to the surface of the mounting formation.

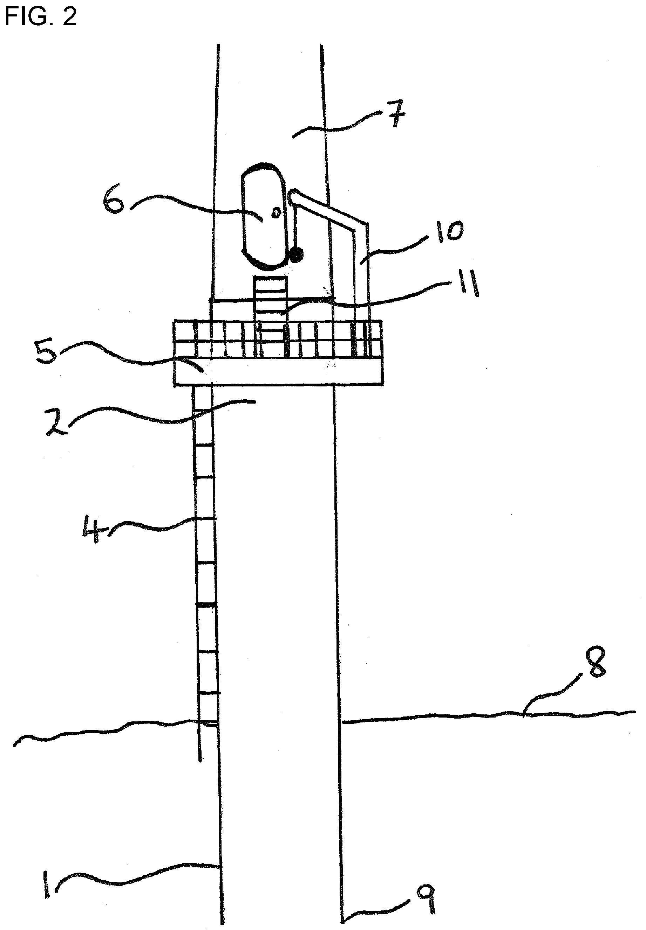

Although providing a separate mounting formation on a monopile avoids the need for a transition piece, new issues arise with such an arrangement. Figure 2 shows a simplified diagram of an example TP-less monopile in which the wind turbine tower 7 is connected directly to the monopile body 1. In the absence of a transition piece, the access door 6 for accessing the interior of the wind turbine structure is provided in the wind turbine tower 7. However, due to the stresses and cyclic loading applied to the tower 7 during use, the access platform 5 must be attached to the monopile body 1, rather than the tower 7 itself. The proximity of the access platform 5 to the door 6 is however limited by the space required for the coupling securing the tower 7 to the monopile 1. As a consequence, the access platform 5 is provided at a lower level than the access door 6, and it is then necessary to install steps 11 between them. A lifting mechanism 10 must also be installed to allow equipment to be lifted up to the door 6, together with an additional beam exchange system for moving equipment to the door when the platform and door are at different levels. At the same time, in order to minimise the distance to the door 6, the platform 5 is typically mounted as close as possible to the head of the monopile. However, a knock on effect of this is that the platform 5 is then much higher above the water level 8 than would otherwise be selected to allow easy access from a boat landing. Ultimately, these factors increase the overall complexity of the required secondary steel structures, which mitigates many of the advantages associated with adopting a TP-less design.

Accordingly, there is a need for an improved wind turbine structure and monopile that seeks to address the above problems.

According to a first aspect of the present invention, there is provided a monopile, comprising: a body having a hollow interior, a toe at a distal end for insertion into a soil during monopile installation, and a proximal end region for supporting a structure once the monopile has been installed; and a door aperture provided in the body for accessing the interior of the body, wherein the door aperture is configured to receive a door assembly once the monopile has been installed.

In this way, the present invention provides an improved TP-less monopile design, in which an access platform may be located at a lower position on the monopile body, whilst a wind turbine tower can be directly mounted at or adjacent to the monopile head, within the monopile's proximal end region. In particular, by locating the door aperture in the body of the monopile, an access door can be fitted to the monopile itself, rather than having to provide the door in the wind turbine tower. As a consequence, the subsequently attached platform can be directly attached to the monopile adjacent to the access door. This thereby avoids the requirement to provide additional stairs or a lifting mechanism up to access the door. At the same time, because the door and the platform can be located much lower down in the structure, access via a boat landing is simplified. Importantly, with the present invention, a door aperture is provided, rather than a complete door assembly. After monopile installation, the door assembly is subsequently fitted into the door aperture to provide a functioning door way. This is important because the impact shocks applied during pile driving would deform a door assembly if it were to be fitted prior to installation of the monopile. As such, the door's hinges and frame may be deformed out of alignment, which would compromise the door's functioning. Therefore, by providing a door aperture and fitting the door assembly later, the present invention allows a door to be provided in the monopile body, with the associated positional benefits, without compromising its functioning.

Preferably, the monopile comprises one or more reinforcement formations for axially reinforcing the body adjacent to the door aperture. In this way, the body is formed with axial reinforcements that reinforce the body material either side of the door for resisting the compressive impact forces applied during pile driving. This thereby compensates for the reduced compressive strength of the door aperture within the associated region of the body. During the pile driving process, impact forces are delivered to the head of the monopile, which sends an axial shockwave down through the walls of the monopile to its distal toe. In the absence of reinforcement, these shockwaves may otherwise distort the door aperture and, in turn, compromise the integrity of the monopile body as a whole. Therefore, by providing reinforcement formations, the potential distortion of the door aperture is mitigated, and hence the integrity of the monopile structure is maintained.

Preferably, the one or more reinforcement formations comprise one or more struts longitudinally aligned with the body. In this way, the reinforcement formations may be provided as rods or beams formed on the body's surface and oriented lengthways for resisting compression of the body through the region of the body comprising the door. Preferably, the reinforcement formations are at least the same height as the height of the door aperture, and more preferably extend beyond the upper and lower boundaries of the door aperture.

Preferably, the one or more reinforcement formations comprise two reinforcement formations located either side of the door aperture. In this way, the body is reinforced on both sides of the door for providing axial support across the door region.

Preferably, the reinforcement formations are located at least 100mm from the door aperture, and more preferably at least 250mm. In this way, the reinforcement formations are sufficiently distanced from the door aperture to allow a door assembly to fit around the periphery of the door aperture and engage with both the opposing interior and exterior surfaces of the body. This thereby allows an effective door seal to be more easily achieved.

Preferably, the one or more reinforcement formations are provided on the interior of the body. This allows for simplified manufacture. In particular, each section of the monopile body is typically formed as a plate, which is then rolled into a circular tube section by applying force through rollers engaged primarily with the exterior surface. As such, by providing the reinforcement formations on the interior surface, the section containing the door aperture may be machined in substantially the same way as the other sections.

Preferably, the one or more reinforcement formations project radially inward from the body's interior surface. In this way, the reinforcement formations protrude from the interior surface of the body and extend downward, providing columns of additional axial and bending support down the length of the monopile body.

Preferably, the one or more reinforcement formations comprise tapered ends for tapering between the body's surface and a radially projected section. In this way, stress concentrations are minimised as the axial stiffness provided by the reinforcement formations gradually increases through the taper at the proximal end of the formation and gradually decreases through the taper at the distal end of the formation.

Preferably, the one or more reinforcement formations comprise a T-beam cross-section. In this way, a simplified beam structure is provided for increasing compressive strength, whilst minimising weight.

Preferably, the one or more reinforcement formations are welded to the body. In this way, the reinforcement formations may be formed separately and secured to the section of the body containing the door.

Preferably, the body comprises a plurality of connected tubular sections, and one of said tubular sections comprises the door aperture formed therein.

Preferably, the one or more reinforcement formations are configured to not substantially alter the lateral stiffness of the body adjacent to the door aperture. In this way, the risk of stress concentrations due to differences in lateral stiffness between different regions of the body are mitigated. For example, if the body section containing the door aperture were to be laterally reinforced, its stiffness under lateral loads may be higher than the adjacent body sections connected either side. Over time, fatigue failure could otherwise compromise the junctions between these sections under the cyclic lateral loads applied by the wind turbine tower during use.

Preferably, the structure is a wind turbine tower.

According to a second aspect of the present invention, there is provided a wind turbine structure comprising: a monopile according to any of the above statements; and a wind turbine tower mounted to the monopile and comprising a rotor blade assembly, a generator housed within a nacelle, and a tower support supporting the rotor blade assembly and nacelle in an elevated position above the monopile.

According to a third aspect of the present invention, there is provided a method of installing a monopile, comprising the steps of inserting a monopile according to any of the above statements into a soil; and driving the monopile to a required installation depth. The monopile may be driven by applying impacts through a pile driver hammer. The method may further comprise the step of installing a door assembly into the door aperture once the monopile has been driven to the required installation depth. The method may further comprise installing a platform at the same level as the door aperture.

An illustrative embodiment of the present invention will now be described with reference to the accompanying drawings, in which:
Figure 1 shows a conventional wind turbine structure comprising a monopile and a transition piece supporting a wind turbine tower;
Figure 2 shows a conventional TP-less wind turbine structure comprising a monopile directly supporting a wind turbine tower;
Figure 3 shows a sectioned isomeric view of a section of monopile body according to an illustrative embodiment of the present invention;
Figure 4 shows the monopile according to the illustrative embodiment during installation;
Figure 5 shows a horizontal cross sectional view of a section of the monopile according to the illustrative embodiment, with the door assembly fitted; and
Figure 6 shows the monopile according to the illustrative embodiment, once installed.

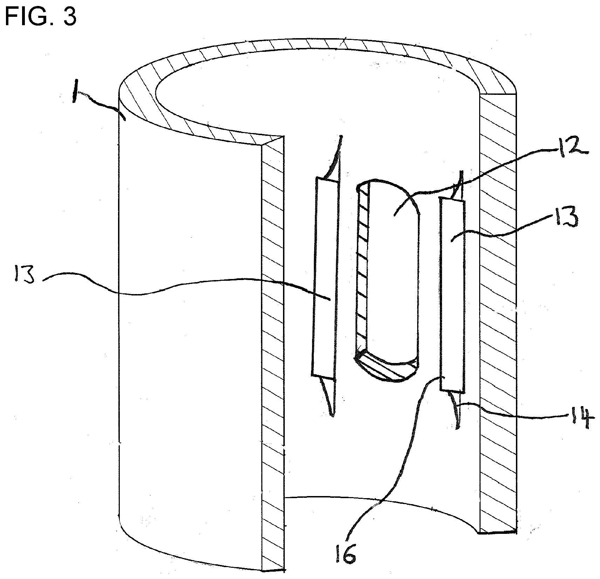

Figures 3 to 6 show a monopile 1 according to an illustrative embodiment of the present invention. Advantageously, the monopile 1 is provided with a door aperture 12 into which a door assembly 6,18 can be subsequently fitted after the monopile has been installed.

The monopile 1 is constructed from a plurality of sections that may be connected together onshore to form a hollow tube shaped body for insertion into a soil. In other embodiments, the monopile body 1 may further comprise one or more conical sections. Figure 3 shows a sectioned isomeric view of one section of the monopile body 1 containing the door aperture 12. As with other sections, the section of monopile body 1 shown in Figure 3 is formed from a plate of steel that has been bent in a bending machine comprising a plurality of rollers. The ends of the bent plate are then joined to form an annulus with the curved wall defining a circular cross section. In this section, a door aperture 12 is provided that forms an opening through the wall of the body 1.

Two reinforcement struts 13 are provided on the interior surface of the body 1, either side of the door aperture 12 to axially reinforce the body 1 adjacent to the door aperture 12. The reinforcement struts 13 are provided as steel T-beams, with a flange 16 connected to the interior surface of the body 1 by a solid radially projecting web piece 14. As such, each reinforcement strut 13 effectively forms an I-beam arrangement, with the interior surface of the body 1 functioning as the opposing flange to the reinforcement strut's flange 16. With this arrangement, a a formation is provided which projects radially inward from the interior surface of the body 1, and extends longitudinally down the body 1, parallel with the longitudinal axis of the door aperture 12. The reinforcement struts 13 extend beyond the boundary of the door aperture 12 at the top and bottom. In this respect, in these regions, each end of the reinforcement struts 13 are provided with a tapered section of the web 14, tapering between the projected flange 16 and the interior surface of the body 1. This thereby provides a gradual change in axial stiffness to avoid stress concentrations. In this embodiment, the reinforcement formations are spaced 250mm from the sides of door aperture 12. In this respect, in embodiments, this spacing is preferably within the range of 100-400mm, and most preferably between 200-300mm to allow space for the door assembly to be fitted. In particular, this allows the door frame to connect to both the interior and exterior surfaces of the body 1, either side of the door aperture 12.

The reinforcement struts 13 provide axial reinforcement at the sides of the door aperture 12, but importantly do not significantly alter the lateral stiffness of the associated section of the body 1 as a whole. Firstly, this prevents deformations that might otherwise be caused by localised distortions in stiffness response as an impact wave propagates through the body material during pile driving. For example, if the door aperture 12 were stiffened by a flange around its periphery, the lateral stiffness response would be different as the shear wave passes through the sections of body containing the top, sides and bottom of the aperture. This could deform the body around the aperture 12. Secondly, as the lateral stiffness of this section of the body 1 is substantially the same other sections, it also substantially mirrors their response under the cyclic lateral loads applied during subsequent operation of the wind turbine. This mitigates the risk of fatigue failure.

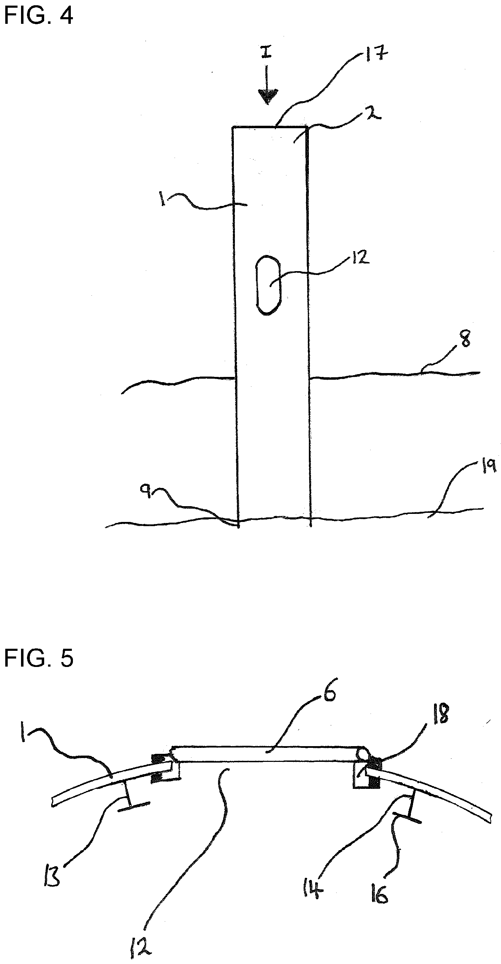

Figure 4 shows the monopile 1 during installation. The distal end of the monopile 1 comprises a toe 9 that is inserted into the soil 19 of the seabed under its own weight. Once inserted, the monopile 1 is then pile driven into the soil 19 by using a hammer (not shown) to apply impacts in the insertion direction I to the head 17 at the proximal end region 2 of the body 1. During each hammer impact, the impact force is transmitted axially down the body 1 to the toe 9, driving it further into the soil 19. Whilst this impact force generates a pressure wave that propagates down through the body's wall, the force is sufficiently high to also manifest as a shear wave that forces the body 1 to elastically displace laterally as the wave is transmitted there through. Advantageously, the reinforcement formations are configured to mitigate the effects of these impact loads, which have different technical considerations to an applied static compressive load.

In this connection, as the impact waves propagate through the section of the pile comprising the door aperture 12, the reinforcement struts 13 act to axially reinforce the body 1 to prevent excessive deformation of the door aperture 12. That is, the axial alignment of the struts 13 not only acts to transmit the pressure wave around the door aperture 12, but they resist any lateral displacement of the door caused by the shear wave. As such, the presence of the door aperture 12 does not reduce the overall axial stiffness of the monopile as a whole, allowing it to be driven to the required installation depth without the integrity of the structure being compromised.

Once the monopile 1 has been installed to the required depth, a door assembly may then be fitted to the door aperture 12. Figure 5 shows a horizontal cross sectional view of the door aperture 12 once the door assembly 6,18 has been fitted. The door assembly 6,18 comprises a frame section 18 that is fitted into the door aperture 12 and engages around both the opposing interior and exterior surfaces of the body 1. This provides a secure fixing for the frame's hinges to pivotably support the door 6. Importantly, as the door assembly 6,18 is fitted after installing the monopile, it is not subjected to the impact forces applied during pile driving. As such, damage to the hinges and other moveable components of the door assembly 6,18 are avoided. At the same time, it is possible to accommodate minor deformation to the door aperture 12 by tolerances within the mounting of the door frame 18.

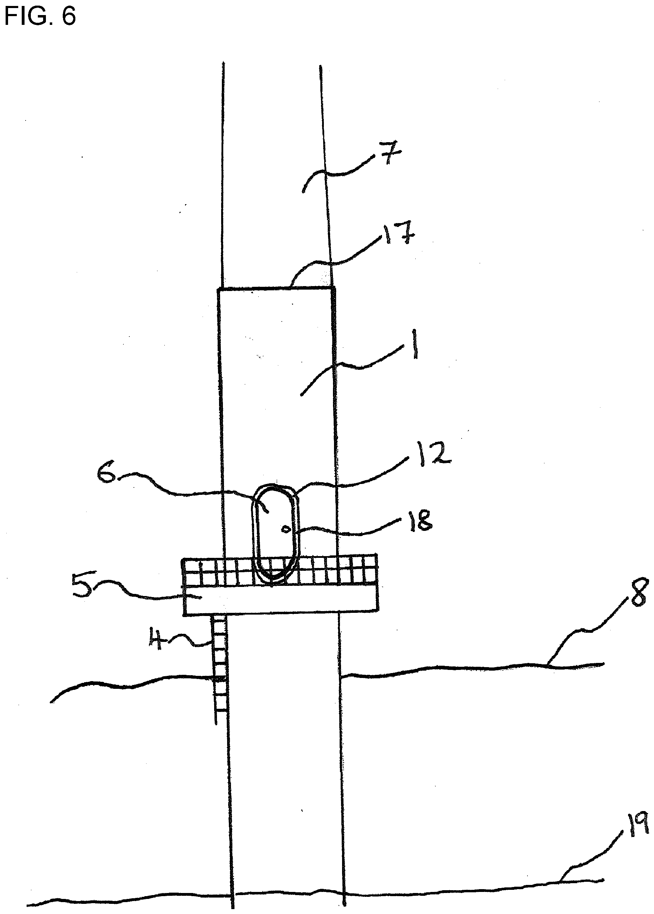

Figure 6 shows the monopile according to the illustrative embodiment once installed and fitted with the wind turbine tower. The door assembly 6,18 and the secondary steel structures of the platform 5 and ladder 4 have also been fitted. As shown, with the door 6 provided in the monopile body, the platform 5 can be located at the same level as the door way. The platform may also be located at a lower position on the monopile, closer to the water level 8, but still nevertheless clear of the any waves in the water. Therefore, steps and additional beam exchange system are no longer required to access the door 6. At the same time, the lower platform 5 allows much simpler access from a boat landing via a short ladder 4.

As with other TP-less monopiles, the monopile 1 shown in figure 6 allows significant advantages in terms of speed of installation. For example, by avoiding having to wait for the transition piece to be installed and the mounting to set, the idle time of the heavy lift equipment required to install the monopile and the turbine tower is minimised. As this heavy lift equipment is typically rented, such a time saving translates to a considerable overall cost saving. At the same time, less steel is required by avoiding the need for an overlapping transition piece. It also frees up space on the transportation ship, and hence allows further cost savings here.

It will be understood that the embodiment illustrated above shows an application of the invention only for the purposes of illustration. In practice the invention may be applied to many different configurations, the detailed embodiments being straightforward for those skilled in the art to implement.

For example, although in the above illustrative embodiment the reinforcement formations are provided in an I-beam configuration, it will be understood that other configurations are also possible.

## Claims

1. A monopile, comprising:
a body having a hollow interior, a toe at a distal end for insertion into a soil during monopile installation, and a proximal end region for supporting a structure once the monopile has been installed; and
a door aperture provided in the body for accessing the interior of the body, wherein the door aperture is configured to receive a door assembly once the monopile has been installed.

2. A monopile according to claim 1, further comprising one or more reinforcement formations for axially reinforcing the body adjacent to the door aperture.

3. A monopile according to claim 2, wherein the one or more reinforcement formations comprise one or more struts longitudinally aligned with the body.

4. A monopile according to claim 2 or 3, wherein the reinforcement formations are at least the same height as the height of the door aperture.

5. A monopile according to any of claims 2 to 4, wherein the one or more reinforcement formations comprise two reinforcement formations located either side of the door aperture.

6. A monopile according to claim 5, wherein the reinforcement formations are located at least 100mm from the door aperture.

7. A monopile according to any of claims 2 to 6, wherein the one or more reinforcement formations are provided on the interior of the body.

8. A monopile according to claim 7, wherein the one or more reinforcement formations project radially inward from the body's interior surface.

9. A monopile according to any of claims 2 to 8, wherein the one or more reinforcement formations comprise tapered ends for tapering between the body's surface and a radially projected section.

10. A monopile according to any of claims 2 to 9, wherein the one or more reinforcement formations comprise a T-beam cross-section.

11. A monopile according to any of claims 2 to 10, wherein the one or more reinforcement formations are welded to the body.

12. A monopile according to any of claims 2 to 11, wherein the body comprises a plurality of connected tubular sections, and one of said tubular sections comprises the door aperture formed therein.

13. A monopile according to any of claims 2 to 12, wherein the one or more reinforcement formations are configured to not substantially alter the lateral stiffness of the body adjacent to the door aperture.

14. A monopile according to any preceding claim, wherein the structure is a wind turbine tower.

15. A wind turbine structure comprising:
a monopile according to any preceding claim; and
a wind turbine tower mounted to the monopile and comprising a rotor blade assembly, a generator housed within a nacelle, and a tower support supporting the rotor blade assembly and nacelle in an elevated position above the monopile.

16. A method of installing a monopile, comprising the steps of:
inserting a monopile according to any of claims 1 to 14 into a soil; and
driving the monopile to a required installation depth.

17. A method of installing a monopile according to claim 16, further comprising the step of installing a door assembly into the door aperture once the monopile has been driven to the required installation depth.

18. A method of installing a monopile according to claim 16 or 17, further comprising installing a platform at the same level as the door aperture.
